# EUROPEAN PATENT SPECIFICATION

(11) **EP 4 524 851 B1**
(45) Date of publication and mention of the grant of the patent: **23.09.2026**
(21) Application number: 22941495.8
(22) Date of filing: 29.11.2022
(51) Int. Cl.: G06Q 10/047, G06Q 10/087, G06Q 50/04

(54) **PATH GENERATION METHOD AND APPARATUS, COMPUTER DEVICE AND STORAGE MEDIUM**
PFADERZEUGUNGSVERFAHREN UND -VORRICHTUNG, COMPUTERVORRICHTUNG UND SPEICHERMEDIUM
PROCÉDÉ ET APPAREIL DE GÉNÉRATION DE CHEMINS, DISPOSITIF INFORMATIQUE ET SUPPORT DE STOCKAGE

(30) Priority: 11.05.2022 CN 202210506013
(43) Date of publication of application: 19.03.2025
(73) Proprietor: Meetfuture Technology (Shanghai) Co., Ltd., Shanghai 200131 (CN)
(72) Inventor: MIAO, Feng, Shanghai 200131 (CN); SHEN, Guoli, Shanghai 200131 (CN)
(74) Representative: Balder IP Law, S.L.
(86) International application number: PCT/CN2022/135184
(87) International publication number: WO 2023/216560

(56) References cited:
- EP-B1- 1 145 090
- CN-A- 109 784 820
- CN-A- 112 651 565
- CN-A- 112 668 964
- CN-A- 112 907 193
- CN-A- 113 705 901
- CN-A- 114 612 049
- JP-A- 2020 030 724
- US-A1- 2013 226 446

## Description

### TECHNICAL FIELD

The present disclosure relates to the field of control technology for transport of wafers, and in particular to a method, device, computer apparatus, and storage medium for generating routes.

### BACKGROUND

After a wafer transport system issues an instruction for conveying wafers from a starting position to a destination position, on the one hand, when a plurality of transport systems are available, the wafer transport system needs to select transport system(s) for transporting wafers. On the other hand, in a case of a long-distance transport, at least one transfer station is necessary during transport, and there are usually a plurality of routes leading to the at least one transfer station. Thus, how to select transfer station(s) based on nodes of known routes, and how to select an optimal route from a plurality of routes starting from the starting position, passing through the at least one transfer station and ending at the destination position, has become a challenge in the existing technologies.

In view of this, the present disclosure provides technical solutions for addressing the above technical problems.

EP1145090B1 relates to a method and system for dynamically routing a material transport vehicle using traffic based parameters. A controller directed to allocate a material transport vehicle to a particular node, selects the material transport vehicle that is physically closest to the particular node. The controller calculates an optimal route by identifying the possible routes between the initial node of the material transport vehicle and the destination, and analyzing each of the nodes according to a metric function by calculating a metric function value for each identified route. The controller then selects the route for the material transport vehicle having the smallest metric function value. The metric function may include parameters associated with each of the nodes in the material transport system including a node-to-node distance parameter, a node crossing parameter, and the number of MTVs in a queue at each node within the route. In one embodiment, the metric function is given by a mathematical formula.

### SUMMARY

The invention is set out in the appended set of claims.

### BRIEF DESCRIPTION OF THE DRAWINGS

The preferred embodiments will be illustrated below in a clear and understandable manner, in conjunction with the accompanying drawings, in order to further illustrate the above features, technical features, advantages, and implementation methods.
FIG. 1 is a flow chart of a method for generating routes according to some embodiments of the present disclosure.
FIG. 2 is a schematic diagram of routing nodes according to some embodiments of the present disclosure.
FIG. 3 shows a list of initial transport routes according to some embodiments of the present disclosure.
FIG. 4 shows a list of parameters of the routing nodes according to some embodiments of the present disclosure.
FIG. 5 is a structural block diagram of a device for generating routes according to some embodiments of the present disclosure.
FIG. 6 is a block diagram of internal structures of a computer apparatus according to some embodiments of the present disclosure.

### DETAILED DESCRIPTION OF THE EMBODIMENTS

In the following, the embodiments of the present disclosure will be illustrated in detail with reference to the accompanying drawings, in order to illustrate the embodiments of the present disclosure or the technical solutions in the prior art more clearly. Obviously, the illustrated drawings only show some the embodiments of the present disclosure. Those skilled in the art can obtain other drawings and other embodiments based on these drawings, without any inventive effort.

Based on the present disclosure, those skilled in the art should understand that one respective aspect illustrated herein can be implemented independently of any other aspect, and that two or more of the aspects can be combined in various ways. For example, the device and/or the method can be implemented using any number and aspect illustrated in the present disclosure. Moreover, the device and/or the method may be implemented using other structures and/or functionalities other than one or more aspects of the aspects illustrated in the present disclosure.

It should be further noted that the diagrams provided in the following embodiments only illustrate the basic concept of the present disclosure in a schematic manner. The diagrams only show the components related to the present disclosure and are not drawn according to the actual numbers, shapes, and sizes of the components in practice. The form, number, and scale of each component in practice may be arbitrarily changed, and the layout of the components may also be more complex.

Moreover, in the following description, specific details are provided to facilitate a thorough understanding of the examples. However, those skilled in the art shall understand that the aspects can be implemented without these specific details. The terms "first", "second", or the like are only for the purpose of illustration and shall not be understood as indicating or implying relative importance or implying the quantity of technical features indicated. Therefore, features limited by "first", "second", or the like may explicitly or implicitly include one or more features. In the illustration of the present disclosure, unless otherwise specified, "a plurality of" means two or more.

In semiconductor factories, transport of front opening unified pods (FOUPs) for wafers is managed. The transport includes transport inside a fabrication (FAB) cleanroom, transport among cleanrooms, and transport across floors, and destinations of the transport include machine(s), storage warehouse(s), overhead buffer(s) (OHBs), and conveyor(s) (Convery), in order to reduce duration of transport among machines, thereby improving transport efficiency.

After a wafer transport system issues an instruction for conveying wafers from a starting position to a destination position, on the one hand, when a plurality of transport systems are available, the wafer transport system needs to select transport system(s) for transporting wafers. On the other hand, in a case of a long-distance transport, at least one transfer station is necessary during transport, but there are usually a plurality of routes leading to the at least one transfer station. Thus, how to select transfer station(s) based on nodes of known routes, and how to select an optimal route from a plurality of routes starting from the starting position, passing through the at least one transfer station and ending at the destination position, has become a challenge in the existing technologies.

In order to overcome the above-mentioned deficiency in the existing technologies, embodiments of the present disclosure provide a method, device, computer apparatus, and storage medium for generating routes.

Some embodiments of the present disclosure provide a method for generating routes, applicable to a material control system, including: receiving a transport request for a batch of wafers to be transported, where the transport request includes an initial storage position and a destination storage position for the batch of wafers to be transported; acquiring a list of routing nodes obtained from mapping of storage positions, where the list of routing nodes includes attribute information of the routing nodes corresponding to the storage positions, and the attribute information includes storage state information and weights; selecting, based on the storage state information, transport routing nodes available for temporarily storing the batch of wafers to be transported from the list of routing nodes; determining, based on the transport routing nodes, a plurality of initial transport routes between the initial storage position and the destination storage position, where each initial transport route of the plurality of initial transport routes includes two or more transport routing nodes of the transport routing nodes, and each transport routing node of the transport routing nodes has a respective current waiting duration and a respective estimated transferring duration; and calculating a respective sum of measurement criterions for each initial transport route of the plurality of initial transport routes based on the respective current waiting duration, the respective estimated transferring duration and a respective weight of each transport routing node of the transport routing nodes, and selecting, from the plurality of initial transport routes, an initial transport route having a minimum sum of measurement criterions as a target route.

In some embodiments, selecting, based on the storage state information, the transport routing nodes available for temporarily storing the batch of wafers to be transported from the list of routing nodes, includes: acquiring, from the list of routing nodes, a respective inventory of wafers in waiting and a respective preset storage threshold of each routing node of routing nodes that are in an available state; and determining, based on preset storage thresholds, the batch of wafers to be transported, and wafers in waiting in inventories, the transport routing nodes available for temporarily storing the batch of wafers to be transported, and setting a state of routing nodes that are not available for storing the batch of wafers to be transported to non-available in a preset number of transport cycles.

In some embodiments, the method further includes: acquiring the respective current waiting duration. Acquiring the respective current waiting duration, includes: acquiring a respective inventory of wafers in waiting of each transport routing node of the transport routing nodes; and calculating the respective current waiting duration based on the respective inventory of wafers in waiting of each transport routing node of the transport routing nodes.

In some embodiments, the method further includes: acquiring the respective estimated transferring duration. Acquiring the respective estimated transferring duration, includes: determining a respective transport distance between each two transport routing nodes of the two or more transport routing nodes of each initial transport route of the plurality of initial transport routes and a respective transport device corresponding to the respective transport distance; receiving a respective transport speed of the respective transport device; and calculating the respective estimated transferring duration based on the respective transport distance and the respective transport speed.

In some embodiments, the method further includes: acquiring the respective weight of each transport routing node of the transport routing nodes. Acquiring the respective weight of each transport routing node of the transport routing nodes, includes: acquiring a rule of calculating the respective weight according to a type of a device currently handling the batch of wafers to be transported; in response to the device being a conveying device, acquiring current waiting durations of the two or more transport routing nodes of each initial transport route of the plurality of initial transport routes, and generating the respective weight of each transport routing node of the two or more transport routing nodes; and in response to the device being a storage device, acquiring a respective number of one or more transfer commands for each transport routing node of the two or more transport routing nodes of each initial transport route of the plurality of initial transport routes, and generating the respective weight of each transport routing node of the two or more transport routing nodes.

In some embodiments, calculating the respective sum of measurement criterions for each initial transport route of the plurality of initial transport routes based on the respective current waiting duration, the respective estimated transferring duration and the respective weight of each transport routing node of the transport routing nodes, includes: acquiring a number of transport of respective one or more transport devices cooperating with each transport routing node of the transport routing nodes in a current transport cycle and respective one or more storage parameters of each transport routing node of the transport routing nodes, and calculating a respective theoretical state value of each transport routing node of the transport routing nodes; calculating a respective measurement criterion of each transport routing node of the transport routing nodes based on the respective current waiting duration, the respective estimated transferring duration, the respective weight and the respective theoretical state value; and calculating the respective sum of measurement criterions of the two or more transport routing nodes of each initial transport route of the plurality of initial transport routes.

The present disclosure further provides a device for generating routes, including: a request reception module, configured to receive a transport request for a batch of wafers to be transported, where the transport request includes an initial storage position and a destination storage position for the batch of wafers to be transported; a node list acquisition module, configured to acquire a list of routing nodes obtained from mapping of storage positions, where the list of routing nodes includes attribute information of the routing nodes corresponding to the storage positions, and the attribute information includes storage state information and weights; a routing node selection module, configured to select, based on the storage state information, transport routing nodes available for temporarily storing the batch of wafers to be transported from the list of routing nodes; an initial route determination module, configured to determine, based on the transport routing nodes, a plurality of initial transport routes between the initial storage position and the destination storage position, where each initial transport route of the plurality of initial transport routes includes two or more transport routing nodes of the transport routing nodes, and each transport routing node of the transport routing nodes has a respective current waiting duration and a respective estimated transferring duration; and a target route selection module, configured to calculate a respective sum of measurement criterions for each initial transport route of the plurality of initial transport routes based on the respective current waiting duration, the respective estimated transferring duration and a respective weight of each transport routing node of the transport routing nodes, and select, from the plurality of initial transport routes, an initial transport route having a minimum sum of measurement criterions as a target route.

In some embodiments, the routing node selection module includes: a wafer inventory acquisition unit, configured to acquire, from the list of routing nodes, a respective inventory of wafers in waiting and a respective preset storage threshold of each routing node of routing nodes that are in an available state; and a node determination unit, configured to determine, based on preset storage thresholds, the batch of wafers to be transported, and wafers in waiting in inventories, the transport routing nodes available for temporarily storing the batch of wafers to be transported, and set a state of routing nodes that are not available for storing the batch of wafers to be transported to non-available in a preset number of transport cycles.

The present disclosure further provides a computer apparatus, including: at least one processor; and a memory. The memory is configured to store computer programs, which, when executed by the at least one processor, causes the at least one processor to implement operations of the method as illustrated above.

The present disclosure further provides a computer-readable storage medium, configured to store computer programs, which, when executed by at least one processor, causes the at least one processor to implement operations of the method as illustrated above.

Compared with the related technologies, advantages of the present disclosure lie in that short conveying duration can be achieved by selecting an available shortest route between the initial storage position and the destination storage position based on sums of measurement criterions, and conveying uniformity during respective one or more transport devices travelling to each of apparatus receiving the batch of wafers to be transported can be ensured by selecting the transport routing nodes available for temporarily storing the batch of wafers to be transported from the list of routing nodes, thereby preventing some conveying device from being too busy or too idle, and making efficient use of conveying resources.

In the following, the technical solutions provided by embodiments of the present disclosure are illustrated in conjunction with the accompanying drawings.

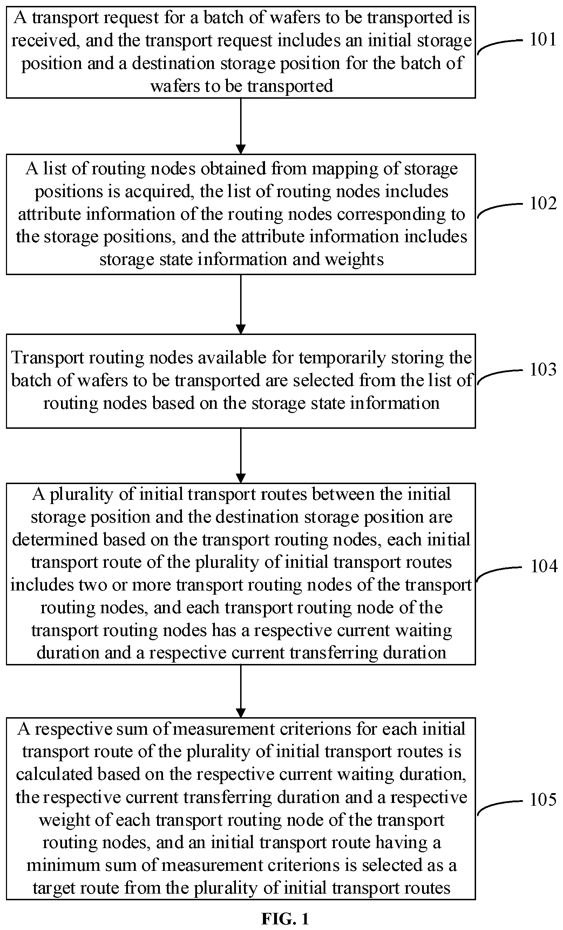

As shown in FIG. 1, some embodiments of the present disclosure provide a method for generating routes, applicable to terminal devices or servers. The terminal devices may include, but be not limited to, various personal computers, laptops, smartphones, tablets, and portable smart devices, and the servers may be implemented using independent servers or one or more server clusters composed of a plurality of servers. In some embodiments, the method for generating routes is applicable to terminal devices or servers in a material control system (MCS) and includes the following operations.

At operation 101, a transport request for a batch of wafers to be transported is received, and the transport request includes an initial storage position and a destination storage position for the batch of wafers to be transported.

MCS represents a material control system used to manage transport of FOUPs for wafers in semiconductor factories. The transport includes transport inside a cleanroom, transport among cleanrooms, and transport across floors, and destinations of the transport include machine(s), storage warehouse(s), OHB(s), and conveyor(s), in order to reduce duration of transport among machines, thereby improving transport efficiency. The processing steps of wafers in semiconductor processes are managed by a manufacturing execution system (MES, a production information management system for execution layers of workshops of a manufacturing enterprise), and a destination of a batch of wafers is notified to the MCS by the MES. After receiving the transport request from the MES, the MCS parses the transport request and generates instructions according to starting position objects and destination position objects obtained by parsing. The instructions may be generated by taking aspects such as types of batches of wafers, priorities of batches, capacities of target storage stations, an optimal route to one or more relay storage stations, or the like into account.

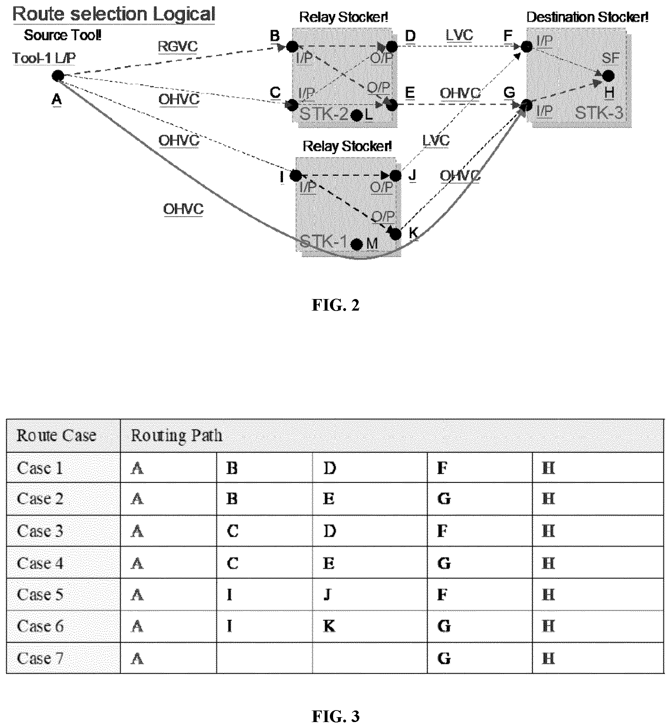

In the MCS, each of the initial storage position and the destination storage position may be a material storage warehouse (STOCKER) or a semiconductor machine. After receiving the transport request from the MES, the MCS extracts the initial storage position and the destination storage position for the batch of wafers to be transported in the transport request. As shown in FIG. 2, the routing node A represents the initial storage position for the batch of wafers to be transported, and the routing node H represents the destination storage position for the batch of wafers to be transported.

At operation 102, a list of routing nodes obtained from mapping of storage positions is acquired, the list of routing nodes includes attribute information of the routing nodes corresponding to the storage positions, and the attribute information includes storage state information and weights.

The storage positions include all geographical positions that can be used to store FOUPs for wafers in the MCS, and therefore also include the geographical positions corresponding to the initial storage position and the destination storage position. One respective routing node may correspond to one storage position, but one respective storage position may correspond to a plurality of routing nodes. One respective storage position may have at least one storage entrance and at least one conveying exit for the FOUPs for wafers, and each of the at least one storage entrance and the at least one conveying exit corresponds to one respective routing node. The attribute information may include respective one or more transfer devices cooperating with each routing node, respective storage state information, a respective weight, and the like for each routing node. The weights are obtained based on operating frequencies of transfer devices in historical data in the MCS. The storage state information may include information of wafers that have been stored at each routing node, information of wafers to be stored at each routing node at a specific time period, or the like. As shown in FIG. 2, transport of wafers between routing node A and routing node B can be implemented only by one or more rail guided vehicle controllers (RGVCs), transport of wafers between routing node A and routing node C, I or G can be implemented only by one or more overhead hoist vehicle controllers (OHVCs), and transport between routing node B and routing node D or E may be implemented by one or more transfer devices in corresponding storage warehouse(s).

One or more servers in the MCS acquires a list of routing nodes obtained from mapping of storage positions, the list of routing nodes includes attribute information of the routing nodes corresponding to the storage positions, and the attribute information includes storage state information and weights.

At operation 103, transport routing nodes available for temporarily storing the batch of wafers to be transported are selected from the list of routing nodes based on the storage state information.

The one or more servers in the MCS select transport routing nodes available for temporarily storing the batch of wafers to be transported from the list of routing nodes based on the storage state information. The one or more servers can select all available transport routing nodes based on the storage state information.

At operation 104, a plurality of initial transport routes between the initial storage position and the destination storage position are determined based on the transport routing nodes, each initial transport route of the plurality of initial transport routes includes two or more transport routing nodes of the transport routing nodes, and each transport routing node of the transport routing nodes has a respective current waiting duration and a respective estimated transferring duration.

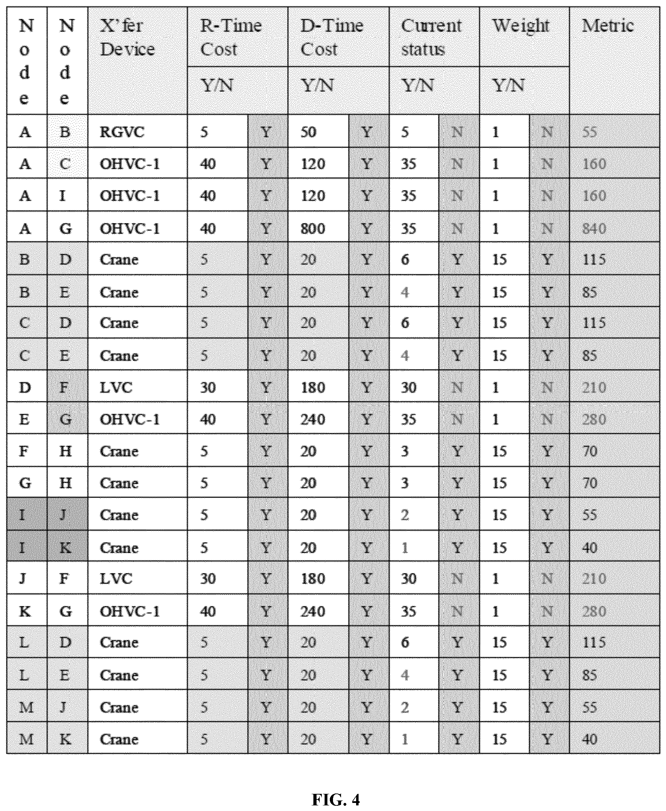

The one or more servers in the MCS determine connection lines among nodes based on selected transport routing nodes, the initial storage position and the destination storage position, and determine a plurality of initial transport routes between the initial storage position and the destination storage position based on the connection lines among nodes. The connection line between two respective nodes indicates that there is a transport route for one or more transport devices available for transport of wafers between the two respective nodes. As shown in FIG. 3, the one or more servers select 7 initial transport routes between A and H. Then, the one or more servers may generate, based on the storage state information in operation 103, a respective current waiting duration and a respective estimated transferring duration of each transport routing node to which the batch of wafers is going to be transported. As shown in FIG. 4, the first column represents transport starting nodes, the second column represents reception nodes for receiving wafers, the third column (X'fer Device) represents transport devices, R-time represents current waiting durations, D-time represents estimated transferring durations, Weight represents the weights, and Current status corresponds to measurement criterions.

At operation 105, a respective sum of measurement criterions for each initial transport route of the plurality of initial transport routes is calculated based on the respective current waiting duration, the respective estimated transferring duration and a respective weight of each transport routing node of the transport routing nodes, and an initial transport route having a minimum sum of measurement criterions is selected as a target route from the plurality of initial transport routes.

The one or more servers in the MCS calculate a respective sum of measurement criterions for each initial transport route based on the respective current waiting duration, the respective estimated transferring duration and a respective weight of each transport route section between two transport routing nodes, and select an initial transport route having a minimum sum of measurement criterions as a target route. One respective sum of measurement criterions is obtained by adding the measurement criterions of all routing nodes in a corresponding initial transport route. A respective measurement criterion is a value that may be used to describe a geometric route between two corresponding routing nodes. A respective measurement criterion of each routing node may be calculated by: R-time + D-time + (value of Current status * weight), where the R-time, the D-time and value of the weight may be set based on empirical values as needed, or may be calculated based on current storage state information. The value of Current status is automatically calculated by the system and may be calculated based on transfer types and storage types of devices. The transport types are associated with the number of usage of the transport devices, and the storage types are associated with a preset minimum storage capacity, a preset maximum storage capacity and a storage capacity that has been used of a storage warehouse where a respective storage position is located, calculated average R-TIME (duration for waiting for starting of transfer), and the like.

Based on the data as shown in FIG. 4, sums of measurement criterions for the 7 routes between node A and node H may be calculated as follows:

| | | |
|---|---|---|
| 1. | A, B, D, F, H | sum of measurement criterions: 660; |
| 2. | A, B, E, G, H | sum of measurement criterions: 490; |
| 3. | A, C, D, F, H | sum of measurement criterions: 550; |
| 4. | A, C, E, G, H | sum of measurement criterions: 595; |
| 5. | A, I, J, F, H | sum of measurement criterions: 495; |
| 6. | A, I, K, G, H | sum of measurement criterions: 550; |
| 7. | A, G, H | sum of measurement criterions: 910. |

Thus, the second route having a sum of measurement criterions valued 490 is selected as the target route.

With the above method for generating routes, short conveying duration can be achieved by selecting an available shortest route between the initial storage position and the destination storage position, and conveying uniformity during respective one or more transport devices travelling to each of apparatus receiving the batch of wafers to be transported can be ensured, thereby preventing some conveying device from being too busy or too idle, and making efficient use of conveying resources.

In some embodiments, selecting, based on the storage state information, the transport routing nodes available for temporarily storing the batch of wafers to be transported from the list of routing nodes, includes: acquiring, from the list of routing nodes, a respective inventory of wafers in waiting and a respective preset storage threshold of each routing node of routing nodes that are in an available state; and determining, based on preset storage thresholds, the batch of wafers to be transported, and wafers in waiting in inventories, the transport routing nodes available for temporarily storing the batch of wafers to be transported, and setting a state of routing nodes that are not available for storing the batch of wafers to be transported to non-available in a preset number of transport cycles.

The one or more servers acquire the respective inventory of wafers in waiting and the respective preset storage threshold of each routing node of routing nodes that are in an available state from the list of routing nodes. The respective preset storage threshold may include a minimum storage capacity, a maximum storage capacity, or the like of a storage warehouse corresponding to a respective routing node. The one or more servers may calculate a respective storage capacity that has been used based on a respective inventory of wafers in waiting of each routing node. The one or more servers determine, based on preset storage thresholds, the batch of wafers to be transported, and wafers in waiting in inventories, the transport routing nodes available for temporarily storing the batch of wafers to be transported, and set a state of routing nodes that are not available for storing the batch of wafers to be transported to non-available in a preset number of transport cycles. Each transport task represents a transport cycle, thus the state information of each routing node may vary at any time. When a respective routing node is in a state of receiving wafers or going to receive wafers, the state information of the respective routing node is non-available; and when the respective routing node is in an idle state, the state information of the respective routing node is available.

In some embodiments, the method further includes: acquiring the respective current waiting duration. Acquiring the respective current waiting duration, includes: acquiring a respective inventory of wafers in waiting of each transport routing node of the transport routing nodes; and calculating the respective current waiting duration based on the respective inventory of wafers in waiting of each transport routing node of the transport routing nodes.

The one or more servers may acquire the respective inventory of wafers in waiting of each transport routing node, and calculate the respective current waiting duration based on the respective inventory of wafers in waiting. The respective inventory of wafers in waiting may include a storage duration and a storage capacity of a respective batch of wafers being currently stored at each transport routing node, and may further include a storage duration, a storage capacity, a transport waiting duration and the like of a respective batch of wafers to be stored at each transport routing node. The one or more servers calculate the respective current waiting duration based on the respective inventory of wafers in waiting.

In some embodiments, the method further includes: acquiring the respective estimated transferring duration. Acquiring the respective estimated transferring duration, includes: determining a respective transport distance between each two transport routing nodes of the two or more transport routing nodes of each initial transport route of the plurality of initial transport routes and a respective transport device corresponding to the respective transport distance; receiving a respective transport speed of the respective transport device; and calculating the respective estimated transferring duration based on the respective transport distance and the respective transport speed.

The one or more servers determine a respective transport distance between each two transport routing nodes of the two or more transport routing nodes of each initial transport route based on the geographical positions of the two or more transport routing nodes and determine a respective transport device corresponding to the respective transport distance. The one or more servers receive a respective transport speed of the respective transport device, and calculate the respective estimated transferring duration based on the respective transport distance and the respective transport speed.

In some embodiments, the method further includes: acquiring the respective weight of each transport routing node of the transport routing nodes. Acquiring the respective weight of each transport routing node of the transport routing nodes, includes: acquiring a rule of calculating the respective weight according to a type of a device currently handling the batch of wafers to be transported; in response to the device being a conveying (TSC) device, acquiring current waiting durations of the two or more transport routing nodes of each initial transport route, and generating the respective weight of each transport routing node of the transport routing nodes; and in response to the device being a stocker (STC) device, acquiring a respective number of one or more transfer commands for each transport routing node of the two or more transport routing nodes of each initial transport route, and generating the respective weight of each transport routing node of the transport routing nodes.

The TSC device is a conveying device, and the weight is generated based on empirical values. The STC device is a storage device, and the weight is generated based on empirical values. The empirical values are obtained according to operating frequencies of transfer devices in historical data in the MCS.

In some embodiments, calculating the respective sum of measurement criterions for each initial transport route of the plurality of initial transport routes based on the respective current waiting duration, the respective estimated transferring duration and the respective weight of each transport routing node of the transport routing nodes, includes: acquiring a number of transport of respective one or more transport devices cooperating with each transport routing node of the transport routing nodes in a current transport cycle and respective one or more storage parameters of each transport routing node of the transport routing nodes, and calculating a respective theoretical state value of each transport routing node of the transport routing nodes; calculating a respective measurement criterion of each transport routing node of the transport routing nodes based on the respective current waiting duration, the respective estimated transferring duration, the respective weight and the respective theoretical state value; and calculating the respective sum of measurement criterions of the two or more transport routing nodes of each initial transport route of the plurality of initial transport routes.

The one or more servers acquire the number of transport, between a starting node and a destination node of an initial transport route, of respective one or more transport devices cooperating with each transport routing node in a current transport cycle and respective one or more storage parameters of each transport routing node, and calculate a respective theoretical state value of each transport routing node. Theoretical state values may be stored in a mapping table beforehand, and may increase linearly with the number of transport. The one or more servers calculate the respective measurement criterion of each transport routing node based on the respective current waiting duration, the respective estimated transferring duration, the respective weight and the respective theoretical state value. The respective measurement criterion of each routing node may be calculated by: R-time + D-time + (value of Current status * weight), where the R-time, the D-time and value of the weight may be set based on empirical values as needed, or may be calculated based on current storage state information. The one or more servers calculate the respective sum of measurement criterions of the two or more transport routing nodes of each initial transport route.

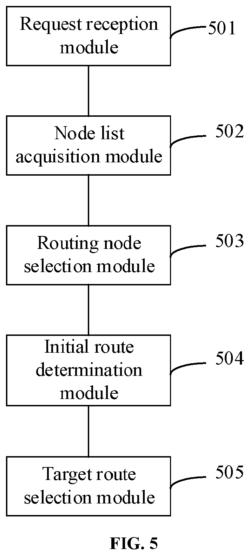

In some embodiments, as shown in FIG. 5, a device for generating routes is provided. The device includes a request reception module 501, a node list acquisition module 502, a routing node selection module 503, an initial route determination module 504, and a target route selection module 505.

The request reception module 501 is configured to receive a transport request for a batch of wafers to be transported, where the transport request includes an initial storage position and a destination storage position for the batch of wafers to be transported.

The node list acquisition module 502 is configured to acquire a list of routing nodes obtained from mapping of storage positions, where the list of routing nodes includes attribute information of the routing nodes corresponding to the storage positions, and the attribute information includes storage state information and weights.

The routing node selection module 503 is configured to select, based on the storage state information, transport routing nodes available for temporarily storing the batch of wafers to be transported from the list of routing nodes.

The initial route determination module 504 is configured to determine, based on the transport routing nodes, a plurality of initial transport routes between the initial storage position and the destination storage position, where each initial transport route of the plurality of initial transport routes includes two or more transport routing nodes of the transport routing nodes, and each transport routing node of the transport routing nodes has a respective current waiting duration and a respective estimated transferring duration.

The target route selection module 505 is configured to calculate a respective sum of measurement criterions for each initial transport route of the plurality of initial transport routes based on the respective current waiting duration, the respective estimated transferring duration and a respective weight of each transport routing node of the transport routing nodes, and select, from the plurality of initial transport routes, an initial transport route having a minimum sum of measurement criterions as a target route.

In some embodiments, the routing node selection module includes:
a wafer inventory acquisition unit, configured to acquire, from the list of routing nodes, a respective inventory of wafers in waiting and a respective preset storage threshold of each routing node of routing nodes that are in an available state; and
a node determination unit, configured to determine, based on preset storage thresholds, the batch of wafers to be transported, and wafers in waiting in inventories, the transport routing nodes available for temporarily storing the batch of wafers to be transported, and set a state of routing nodes that are not available for storing the batch of wafers to be transported to non-available in a preset number of transport cycles.

In some embodiments, the initial route determination module includes:
a node determination unit, configured to determine a respective transport distance between each two transport routing nodes of the two or more transport routing nodes of each initial transport route of the plurality of initial transport routes and a respective transport device corresponding to the respective transport distance;
a transport speed reception unit, configured to receive a respective transport speed of the respective transport device; and
a estimated transferring duration calculation unit, configured to calculate the respective estimated transferring duration based on the respective transport distance and the respective transport speed.

In some embodiments, the node list acquisition module includes:
a type acquisition unit, configured to acquire a rule of calculating the respective weight according to a type of a device currently handling the batch of wafers to be transported; and
a weight generation unit, configured to in response to the device being a TSC device, acquire current waiting durations of the transport routing nodes, and generate the respective weight of each transport routing node; and in response to the device being a STC device, acquire a respective number of one or more transfer commands for each transport routing node, and generate the respective weight of each transport routing node.

In some embodiments, the target route selection module includes:
a theoretical state value calculation unit, configured to acquire a number of transport of respective one or more transport devices cooperating with each transport routing node of the transport routing nodes in a current transport cycle and respective one or more storage parameters of each transport routing node of the transport routing nodes, and calculate a respective theoretical state value of each transport routing node of the transport routing nodes;
a measurement criterion calculation unit, configured to calculate a respective measurement criterion of each transport routing node of the transport routing nodes based on the respective current waiting duration, the respective estimated transferring duration, the respective weight and the respective theoretical state value; and
a sum of measurement criterion calculation unit, configured to calculate the respective sum of measurement criterions of the two or more transport routing nodes of each initial transport route of the plurality of initial transport routes.

The definitions on the device for generating routes may refer to the definitions on the method for generating routes as illustrated above, which will not be repeated here. The modules in the device for generating routes may be fully or partially implemented by software, hardware, and their combinations. The above modules may be embedded in or independent of the processor(s) in the computer apparatus in a form of hardware, or may be stored, in a form of software, in the memory of the computer apparatus for the processor(s) to call and execute the operations corresponding to the above modules.

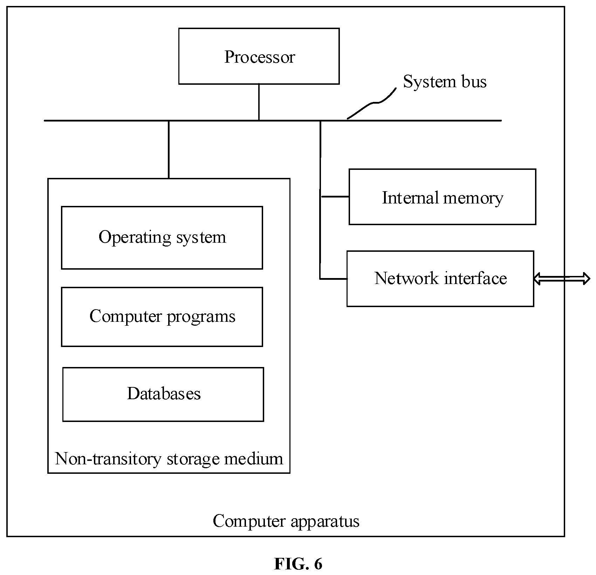

In some embodiments, a computer apparatus is provided. The computer apparatus may be a server having internal structures as shown in FIG. 6. The computer apparatus includes at least one processor, a memory, at least one network interface, and databases connected through a system bus. The at least one processor of the computer apparatus is configured to provide computing and control capabilities. The memory of the computer apparatus includes non-transitory storage medium and an internal memory. The non-transitory storage medium stores operating system(s), computer programs, and databases. The internal memory provides an environment for operation of the operating system(s) and computer programs in the non-transitory storage medium. The databases of the computer apparatus are configured to store attribute information, etc. The at least one network interface of the computer apparatus is configured to communicate with external terminals through network connections. The computer programs cause the at least one processor to implement operations of the method for generating routes when being executed by the at least one processor.

Those skilled in the art shall understand that the structures as shown in FIG. 6 are block diagrams of structures related to the solutions of the present disclosure and do not constitute limitations on the computer apparatus on which the solutions of the present disclosure are applied. The actual computer apparatus may include more or fewer components than shown in the drawing, or combinations of some certain components, or have different component arrangements.

In some embodiments, a computer apparatus is provided. The computer apparatus includes at least one processor and a memory. The memory is configured to store computer programs, which, when executed by the at least one processor, causes the at least one processor to implement the following operations applicable to the MCS: receiving a transport request for a batch of wafers to be transported, where the transport request includes an initial storage position and a destination storage position for the batch of wafers to be transported; acquiring a list of routing nodes obtained from mapping of storage positions, where the list of routing nodes includes attribute information of the routing nodes corresponding to the storage positions, and the attribute information includes storage state information and weights; selecting, based on the storage state information, transport routing nodes available for temporarily storing the batch of wafers to be transported from the list of routing nodes; determining, based on the transport routing nodes, a plurality of initial transport routes between the initial storage position and the destination storage position, where each initial transport route of the plurality of initial transport routes includes two or more transport routing nodes of the transport routing nodes, and each transport routing node of the transport routing nodes has a respective current waiting duration and a respective estimated transferring duration; and calculating a respective sum of measurement criterions for each initial transport route of the plurality of initial transport routes based on the respective current waiting duration, the respective estimated transferring duration and a respective weight of each transport routing node of the transport routing nodes, and selecting, from the plurality of initial transport routes, an initial transport route having a minimum sum of measurement criterions as a target route.

In some embodiments, the operation of selecting, based on the storage state information, the transport routing nodes available for temporarily storing the batch of wafers to be transported from the list of routing nodes which is implemented by executing the computer programs by the at least one processor, includes: acquiring, from the list of routing nodes, a respective inventory of wafers in waiting and a respective preset storage threshold of each routing node of routing nodes that are in an available state; and determining, based on preset storage thresholds, the batch of wafers to be transported, and wafers in waiting in inventories, the transport routing nodes available for temporarily storing the batch of wafers to be transported, and setting a state of routing nodes that are not available for storing the batch of wafers to be transported to non-available in a preset number of transport cycles.

In some embodiments, the computer programs are executed by the at least one processor to implement an operation of acquiring the respective current waiting duration. The operation includes: acquiring a respective inventory of wafers in waiting of each transport routing node of the transport routing nodes; and calculating the respective current waiting duration based on the respective inventory of wafers in waiting of each transport routing node of the transport routing nodes.

In some embodiments, the computer programs are executed by the at least one processor to implement an operation of acquiring the respective estimated transferring duration. The operation includes: determining a respective transport distance between each two transport routing nodes of the two or more transport routing nodes of each initial transport route of the plurality of initial transport routes and a respective transport device corresponding to the respective transport distance; receiving a respective transport speed of the respective transport device; and calculating the respective estimated transferring duration based on the respective transport distance and the respective transport speed.

In some embodiments, the computer programs are executed by the at least one processor to implement an operation of acquiring the respective weight of each transport routing node of the transport routing nodes. The operation includes: acquiring a rule of calculating the respective weight according to a type of a device currently handling the batch of wafers to be transported; in response to the device being a conveying device, acquiring current waiting durations of the two or more transport routing nodes of each initial transport route of the plurality of initial transport routes, and generating the respective weight of each transport routing node of the two or more transport routing nodes; and in response to the device being a storage device, acquiring a respective number of one or more transfer commands for each transport routing node of the two or more transport routing nodes of each initial transport route of the plurality of initial transport routes, and generating the respective weight of each transport routing node of the two or more transport routing nodes.

In some embodiments, the operation of calculating the respective sum of measurement criterions for each initial transport route of the plurality of initial transport routes based on the respective current waiting duration, the respective estimated transferring duration and the respective weight of each transport routing node of the transport routing nodes which is implemented by executing the computer programs by the at least one processor, includes: acquiring a number of transport of respective one or more transport devices cooperating with each transport routing node of the transport routing nodes in a current transport cycle and respective one or more storage parameters of each transport routing node of the transport routing nodes, and calculating a respective theoretical state value of each transport routing node of the transport routing nodes; calculating a respective measurement criterion of each transport routing node of the transport routing nodes based on the respective current waiting duration, the respective estimated transferring duration, the respective weight and the respective theoretical state value; and calculating the respective sum of measurement criterions of the two or more transport routing nodes of each initial transport route of the plurality of initial transport routes.

In some embodiments, a computer-readable storage medium is provided. The computer-readable storage medium is configured to store computer programs, which, when executed by at least one processor, causes the at least one processor to implement the following operations applicable to the MCS: receiving a transport request for a batch of wafers to be transported, where the transport request includes an initial storage position and a destination storage position for the batch of wafers to be transported; acquiring a list of routing nodes obtained from mapping of storage positions, where the list of routing nodes includes attribute information of the routing nodes corresponding to the storage positions, and the attribute information includes storage state information and weights; selecting, based on the storage state information, transport routing nodes available for temporarily storing the batch of wafers to be transported from the list of routing nodes; determining, based on the transport routing nodes, a plurality of initial transport routes between the initial storage position and the destination storage position, where each initial transport route of the plurality of initial transport routes includes two or more transport routing nodes of the transport routing nodes, and each transport routing node of the transport routing nodes has a respective current waiting duration and a respective estimated transferring duration; and calculating a respective sum of measurement criterions for each initial transport route of the plurality of initial transport routes based on the respective current waiting duration, the respective estimated transferring duration and a respective weight of each transport routing node of the transport routing nodes, and selecting, from the plurality of initial transport routes, an initial transport route having a minimum sum of measurement criterions as a target route.

In some embodiments, the operation of selecting, based on the storage state information, the transport routing nodes available for temporarily storing the batch of wafers to be transported from the list of routing nodes which is implemented by executing the computer programs by the at least one processor, includes: acquiring, from the list of routing nodes, a respective inventory of wafers in waiting and a respective preset storage threshold of each routing node of routing nodes that are in an available state; and determining, based on preset storage thresholds, the batch of wafers to be transported, and wafers in waiting in inventories, the transport routing nodes available for temporarily storing the batch of wafers to be transported, and setting a state of routing nodes that are not available for storing the batch of wafers to be transported to non-available in a preset number of transport cycles.

In some embodiments, the computer programs are executed by the at least one processor to implement an operation of acquiring the respective current waiting duration. The operation includes: acquiring a respective inventory of wafers in waiting of each transport routing node of the transport routing nodes; and calculating the respective current waiting duration based on the respective inventory of wafers in waiting of each transport routing node of the transport routing nodes.

In some embodiments, the computer programs are executed by the at least one processor to implement an operation of acquiring the respective estimated transferring duration. The operation includes: determining a respective transport distance between each two transport routing nodes of the two or more transport routing nodes of each initial transport route of the plurality of initial transport routes and a respective transport device corresponding to the respective transport distance; receiving a respective transport speed of the respective transport device; and calculating the respective estimated transferring duration based on the respective transport distance and the respective transport speed.

In some embodiments, the computer programs are executed by the at least one processor to implement an operation of acquiring the respective weight of each transport routing node of the transport routing nodes. The operation includes: acquiring a rule of calculating the respective weight according to a type of a device currently handling the batch of wafers to be transported; in response to the device being a conveying device, acquiring current waiting durations of the two or more transport routing nodes of each initial transport route of the plurality of initial transport routes, and generating the respective weight of each transport routing node of the two or more transport routing nodes; and in response to the device being a storage device, acquiring a respective number of one or more transfer commands for each transport routing node of the two or more transport routing nodes of each initial transport route of the plurality of initial transport routes, and generating the respective weight of each transport routing node of the two or more transport routing nodes.

In some embodiments, the operation of calculating the respective sum of measurement criterions for each initial transport route of the plurality of initial transport routes based on the respective current waiting duration, the respective estimated transferring duration and the respective weight of each transport routing node of the transport routing nodes which is implemented by executing the computer programs by the at least one processor, includes: acquiring a number of transport of respective one or more transport devices cooperating with each transport routing node of the transport routing nodes in a current transport cycle and respective one or more storage parameters of each transport routing node of the transport routing nodes, and calculating a respective theoretical state value of each transport routing node of the transport routing nodes; calculating a respective measurement criterion of each transport routing node of the transport routing nodes based on the respective current waiting duration, the respective estimated transferring duration, the respective weight and the respective theoretical state value; and calculating the respective sum of measurement criterions of the two or more transport routing nodes of each initial transport route of the plurality of initial transport routes.

The above are only the specific embodiments of the present disclosure, but the scope of protection of the present disclosure is not limited to this. Any changes or replacements that are easily conceivable to those skilled in the art within the scope of disclosure of the present disclosure shall fall within the scope of protection of the present disclosure. Therefore, the protection scope of the present disclosure should be determined by the protection scope of the claims.

## Claims

1. A method for generating routes, applicable to a material control system, comprising:
receiving (101) a transport request for a batch of wafers to be transported, wherein the transport request includes an initial storage position and a destination storage position for the batch of wafers to be transported;
acquiring (102) a list of routing nodes obtained from mapping of storage positions, wherein the list of routing nodes includes attribute information of the routing nodes corresponding to the storage positions, and the attribute information includes storage state information and weights of the routing nodes;
selecting (103), based on the storage state information, transport routing nodes available for temporarily storing the batch of wafers to be transported from the list of routing nodes;
determining (104), based on the transport routing nodes, a plurality of initial transport routes between the initial storage position and the destination storage position, wherein each initial transport route of the plurality of initial transport routes includes two or more transport routing nodes of the transport routing nodes, and each transport routing node of the transport routing nodes has a respective current waiting duration obtained based on the storage state information and further determining a respective estimated transferring duration between each two transport routing nodes of the two or more transport routing nodes of each initial transport route of the plurality of initial transport routes; and
calculating (105) a respective sum of measurement criterions for each initial transport route of the plurality of initial transport routes based on the respective current waiting duration and the respective weight of each transport routing node of the transport routing nodes and the respective estimated transferring duration between each two transport routing nodes of the transport routing nodes, and selecting an initial transport route having a minimum sum of measurement criterions from the plurality of initial transport routes as a target route.

2. The method according to claim 1, wherein selecting (103), based on the storage state information, the transport routing nodes available for temporarily storing the batch of wafers to be transported from the list of routing nodes, includes:
acquiring, from the list of routing nodes, a respective inventory of wafers in waiting and a respective preset storage threshold of each routing node of routing nodes that are in an available state; and
determining, based on preset storage thresholds, the batch of wafers to be transported, and wafers in waiting in inventories, the transport routing nodes available for temporarily storing the batch of wafers to be transported, and setting a state of routing nodes that are not available for storing the batch of wafers to be transported to non-available in a preset number of transport cycles.

3. The method according to claim 1, further including: acquiring the respective current waiting duration;
wherein acquiring the respective current waiting duration, includes:
acquiring a respective inventory of wafers in waiting of each transport routing node of the transport routing nodes; and
calculating the respective current waiting duration based on the respective inventory of wafers in waiting of each transport routing node of the transport routing nodes.

4. The method according to claim 1,
wherein determining the respective estimated transferring duration, includes:
determining a respective transport distance between each two transport routing nodes of the two or more transport routing nodes of each initial transport route of the plurality of initial transport routes and a respective transport device corresponding to the respective transport distance;
receiving a respective transport speed of the respective transport device; and
calculating the respective estimated transferring duration based on the respective transport distance and the respective transport speed.

5. The method according to claim 1, further including: acquiring the respective weight of each transport routing node of the transport routing nodes;
wherein acquiring the respective weight of each transport routing node of the transport routing nodes, includes:
acquiring a rule of calculating the respective weight according to a type of a device currently handling the batch of wafers to be transported;
in response to the device being a conveying device, acquiring current waiting durations of the two or more transport routing nodes of each initial transport route of the plurality of initial transport routes, and generating the respective weight of each transport routing node of the two or more transport routing nodes; and
in response to the device being a storage device, acquiring a respective number of one or more transfer commands for each transport routing node of the two or more transport routing nodes of each initial transport route of the plurality of initial transport routes, and generating the respective weight of each transport routing node of the two or more transport routing nodes.

6. The method according to claim 1, wherein calculating (105) the respective sum of measurement criterions for each initial transport route of the plurality of initial transport routes based on the respective current waiting duration and the respective weight of each transport routing node of the transport routing nodes and the respective estimated transferring duration between each two transport routing nodes of the transport routing nodes, includes:
acquiring a number of transport of respective one or more transport devices cooperating with each transport routing node of the transport routing nodes in a current transport cycle and respective one or more storage parameters of each transport routing node of the transport routing nodes, and calculating a respective theoretical state value of each transport routing node of the transport routing nodes;
calculating a respective measurement criterion of each transport routing node of the transport routing nodes based on the respective current waiting duration, the respective estimated transferring duration, the respective weight and the respective theoretical state value; and
calculating the respective sum of measurement criterions of the two or more transport routing nodes of each initial transport route of the plurality of initial transport routes.

7. A device for generating routes, comprising:
a request reception module (501), configured to receive a transport request for a batch of wafers to be transported, wherein the transport request includes an initial storage position and a destination storage position for the batch of wafers to be transported;
a node list acquisition module (502), configured to acquire a list of routing nodes obtained from mapping of storage positions, wherein the list of routing nodes includes attribute information of the routing nodes corresponding to the storage positions, and the attribute information includes storage state information and weights of the routing nodes;
a routing node selection module (503), configured to select, based on the storage state information, transport routing nodes available for temporarily storing the batch of wafers to be transported from the list of routing nodes;
an initial route determination module (504), configured to determine, based on the transport routing nodes, a plurality of initial transport routes between the initial storage position and the destination storage position, wherein each initial transport route of the plurality of initial transport routes includes two or more transport routing nodes of the transport routing nodes, and each transport routing node of the transport routing nodes has a respective current waiting duration obtained based on the storage state information and to further determine a respective estimated transferring duration between each two transport routing nodes of the two or more transport routing nodes of each initial transport route of the plurality of initial transport routes; and
a target route selection module (505), configured to calculate a respective sum of measurement criterions for each initial transport route of the plurality of initial transport routes based on the respective current waiting duration and the respective weight of each transport routing node of the transport routing nodes and the respective estimated transferring duration between each two transport routing nodes of the transport routing nodes, and select, from the plurality of initial transport routes, an initial transport route having a minimum sum of measurement criterions as a target route.

8. The device according to claim 7, wherein the routing node selection module (503) includes:
a wafer inventory acquisition unit, configured to acquire, from the list of routing nodes, a respective inventory of wafers in waiting and a respective preset storage threshold of each routing node of routing nodes that are in an available state; and
a node determination unit, configured to determine, based on preset storage thresholds, the batch of wafers to be transported, and wafers in waiting in inventories, the transport routing nodes available for temporarily storing the batch of wafers to be transported, and set a state of routing nodes that are not available for storing the batch of wafers to be transported to non-available in a preset number of transport cycles.

9. A computer-readable storage medium, configured to store computer programs, which, when executed by at least one processor, causes the at least one processor to implement operations of the method according to any one of claims 1 to 6.

## Patentansprüche

1. Verfahren zum Erzeugen von Pfaden, das auf ein Materialsteuerungssystem anwendbar ist, umfassend:
Empfangen (101) einer Transportanforderung für eine Charge von zu transportierenden Wafern, wobei die Transportanforderung eine anfängliche Speicherposition und eine Zielspeicherposition für die Charge von zu transportierenden Wafern enthält;
Erfassen (102) einer Liste von Routing-Knoten, die aus einer Abbildung von Speicherpositionen erhalten wird, wobei die Liste von Routing-Knoten Attributinformationen der den Speicherpositionen entsprechenden Routing-Knoten enthält, und die Attributinformationen Speicherzustandsinformationen und Gewichte der Routing-Knoten enthalten;
Auswählen (103), auf Grundlage der Speicherzustandsinformationen, von Transport-Routing-Knoten, die zum vorübergehenden Speichern der Charge von zu transportierenden Wafern verfügbar sind, aus der Liste von Routing-Knoten;
Bestimmen (104), auf Grundlage der Transport-Routing-Knoten, einer Vielzahl von anfänglichen Transportpfaden zwischen der anfänglichen Speicherposition und der Zielspeicherposition, wobei jeder anfängliche Transportpfad der Vielzahl von anfänglichen Transportpfaden zwei oder mehr Transport-Routing-Knoten der Transport-Routing-Knoten enthält, und jeder Transport-Routing-Knoten der Transport-Routing-Knoten eine jeweilige aktuelle Wartedauer aufweist, die auf Grundlage der Speicherzustandsinformationen erhalten wird, und ferner Bestimmen einer jeweiligen geschätzten Transferdauer zwischen jeweils zwei Transport-Routing-Knoten der zwei oder mehr Transport-Routing-Knoten jedes anfänglichen Transportpfads der Vielzahl von anfänglichen Transportpfaden; und
Berechnen (105) einer jeweiligen Summe von Messkriterien für jeden anfänglichen Transportpfad der Vielzahl von anfänglichen Transportpfaden auf Grundlage der jeweiligen aktuellen Wartedauer und des jeweiligen Gewichts jedes Transport-Routing-Knoten und der jeweiligen geschätzten Transferdauer zwischen jeweils zwei Transport-Routing-Knoten der Transport-Routing-Knoten, und Auswählen eines anfänglichen Transportpfads, der eine minimale Summe von Messkriterien aufweist, aus der Vielzahl von anfänglichen Transportpfaden als Zielpfad.

2. Verfahren nach Anspruch 1, wobei das Auswählen (103), auf Grundlage der Speicherzustandsinformationen, der Transport-Routing-Knoten, die zum vorübergehenden Speichern der Charge von zu transportierenden Wafern verfügbar sind, aus der Liste von Routing-Knoten umfasst:
Erfassen, aus der Liste von Routing-Knoten, eines jeweiligen Bestands an wartenden Wafern und eines jeweiligen voreingestellten Speicherschwellenwerts jedes Routing-Knotens der Routing-Knoten, die sich in einem verfügbaren Zustand befinden; und
Bestimmen, auf Grundlage voreingestellter Speicherschwellenwerte, der Charge von zu transportierenden Wafern und wartender Wafer in Beständen, der Transport-Routing-Knoten, die zum vorübergehenden Speichern der Charge von zu transportierenden Wafern verfügbar sind, und Einstellen eines Zustands von Routing-Knoten, die zum Speichern der Charge von zu transportierenden Wafern nicht verfügbar sind, auf nicht verfügbar in einer voreingestellten Anzahl von Transportzyklen.

3. Verfahren nach Anspruch 1, ferner umfassend: Erfassen der jeweiligen aktuellen Wartedauer;
wobei das Erfassen der jeweiligen aktuellen Wartedauer umfasst:
Erfassen eines jeweiligen Bestands an wartenden Wafern jedes Transport-Routing-Knotens der Transport-Routing-Knoten; und
Berechnen der jeweiligen aktuellen Wartedauer auf Grundlage des jeweiligen Bestands an wartenden Wafern jedes Transport-Routing-Knotens der Transport-Routing-Knoten.

4. Verfahren nach Anspruch 1, wobei das Bestimmen der jeweiligen geschätzten Transferdauer umfasst:
Bestimmen einer jeweiligen Transportentfernung zwischen jeweils zwei Transport-Routing-Knoten der zwei oder mehr Transport-Routing-Knoten jedes anfänglichen Transportpfads der Vielzahl von anfänglichen Transportpfaden und einer jeweiligen Transportvorrichtung, die der jeweiligen Transportentfernung entspricht;
Empfangen einer jeweiligen Transportgeschwindigkeit der jeweiligen Transportvorrichtung; und
Berechnen der jeweiligen geschätzten Transferdauer auf Grundlage der jeweiligen Transportentfernung und der jeweiligen Transportgeschwindigkeit.

5. Verfahren nach Anspruch 1, ferner umfassend: Erfassen des jeweiligen Gewichts jedes Transport-Routing-Knotens der Transport-Routing-Knoten;
wobei das Erfassen des jeweiligen Gewichts jedes Transport-Routing-Knotens der Transport-Routing-Knoten umfasst:
Erfassen einer Regel zum Berechnen des jeweiligen Gewichts gemäß einem Typ einer Vorrichtung, die aktuell die Charge von zu transportierenden Wafern handhabt;
als Reaktion darauf, dass die Vorrichtung eine Fördervorrichtung ist, Erfassen aktueller Wartedauern der zwei oder mehr Transport-Routing-Knoten jedes anfänglichen Transportpfads der Vielzahl von anfänglichen Transportpfaden, und Erzeugen des jeweiligen Gewichts jedes Transport-Routing-Knotens der zwei oder mehr Transport-Routing-Knoten; und
als Reaktion darauf, dass die Vorrichtung eine Speichervorrichtung ist, Erfassen einer jeweiligen Anzahl von einem oder mehreren Transferbefehlen für jeden Transport-Routing-Knoten der zwei oder mehr Transport-Routing-Knoten jedes anfänglichen Transportpfads der Vielzahl von anfänglichen Transportpfaden, und Erzeugen des jeweiligen Gewichts jedes Transport-Routing-Knotens der zwei oder mehr Transport-Routing-Knoten.

6. Verfahren nach Anspruch 1, wobei das Berechnen (105) der jeweiligen Summe von Messkriterien für jeden anfänglichen Transportpfad der Vielzahl von anfänglichen Transportpfaden auf Grundlage der jeweiligen aktuellen Wartedauer und des jeweiligen Gewichts jedes Transport-Routing-Knotens der Transport-Routing-Knoten und der jeweiligen geschätzten Transferdauer zwischen jeweils zwei Transport-Routing-Knoten der Transport-Routing-Knoten umfasst:
Erfassen einer Anzahl von Transporten jeweiliger einer oder mehrerer Transportvorrichtungen, die mit jedem Transport-Routing-Knoten der Transport-Routing-Knoten in einem aktuellen Transportzyklus zusammenwirken, und jeweiliger eines oder mehrerer Speicherparameter jedes Transport-Routing-Knotens der Transport-Routing-Knoten, und Berechnen eines jeweiligen theoretischen Zustandswerts jedes Transport-Routing-Knotens der Transport-Routing-Knoten;
Berechnen eines jeweiligen Messkriteriums jedes Transport-Routing-Knotens der Transport-Routing-Knoten auf Grundlage der jeweiligen aktuellen Wartedauer, der jeweiligen geschätzten Transferdauer, des jeweiligen Gewichts und des jeweiligen theoretischen Zustandswerts; und
Berechnen der jeweiligen Summe von Messkriterien der zwei oder mehr Transport-Routing-Knoten jedes anfänglichen Transportpfads der Vielzahl von anfänglichen Transportpfaden.

7. Vorrichtung zum Erzeugen von Pfaden, umfassend:
ein Anforderungsempfangsmodul (501), das konfiguriert ist, um eine Transportanforderung für eine Charge von zu transportierenden Wafern zu empfangen, wobei die Transportanforderung eine anfängliche Speicherposition und eine Zielspeicherposition für die Charge von zu transportierenden Wafern enthält;
ein Knotenlisten-Erfassungsmodul (502), das konfiguriert ist, um eine Liste von Routing-Knoten zu erfassen, die aus einer Abbildung von Speicherpositionen erhalten wird, wobei die Liste von Routing-Knoten Attributinformationen der den Speicherpositionen entsprechenden Routing-Knoten enthält, und die Attributinformationen Speicherzustandsinformationen und Gewichte der Routing-Knoten enthalten;
ein Routing-Knoten-Auswahlmodul (503), das konfiguriert ist, um, auf Grundlage der Speicherzustandsinformationen, Transport-Routing-Knoten, die zum vorübergehenden Speichern der Charge von zu transportierenden Wafern verfügbar sind, aus der Liste von Routing-Knoten auszuwählen;
ein Modul zur Bestimmung eines anfänglichen Pfads (504), das konfiguriert ist, um, auf Grundlage der Transport-Routing-Knoten, eine Vielzahl von anfänglichen Transportpfaden zwischen der anfänglichen Speicherposition und der Zielspeicherposition zu bestimmen, wobei jeder anfängliche Transportpfad der Vielzahl von anfänglichen Transportpfaden zwei oder mehr Transport-Routing-Knoten der Transport-Routing-Knoten enthält, und jeder Transport-Routing-Knoten der Transport-Routing-Knoten eine jeweilige aktuelle Wartedauer aufweist, die auf Grundlage der Speicherzustandsinformationen erhalten wird, und um ferner eine jeweilige geschätzte Transferdauer zwischen jeweils zwei Transport-Routing-Knoten der zwei oder mehr Transport-Routing-Knoten jedes anfänglichen Transportpfads der Vielzahl von anfänglichen Transportpfaden zu bestimmen; und
ein Zielpfad-Auswahlmodul (505), das konfiguriert ist, um eine jeweilige Summe von Messkriterien für jeden anfänglichen Transportpfad der Vielzahl von anfänglichen Transportpfaden auf Grundlage der jeweiligen aktuellen Wartedauer und des jeweiligen Gewichts jedes Transport-Routing-Knotens der Transport-Routing-Knoten und der jeweiligen geschätzten Transferdauer zwischen jeweils zwei Transport-Routing-Knoten der Transport-Routing-Knoten zu berechnen, und um aus der Vielzahl von anfänglichen Transportpfaden einen anfänglichen Transportpfad, der eine minimale Summe von Messkriterien aufweist, als Zielpfad auszuwählen.

8. Vorrichtung nach Anspruch 7, wobei das Routing-Knoten-Auswahlmodul (503) umfasst:
eine Wafer-Bestandserfassungseinheit, die konfiguriert ist, um, aus der Liste von Routing-Knoten, einen jeweiligen Bestand an wartenden Wafern und einen jeweiligen voreingestellten Speicherschwellenwert jedes Routing-Knotens der Routing-Knoten, die sich in einem verfügbaren Zustand befinden, zu erfassen; und
eine Knotenbestimmungseinheit, die konfiguriert ist, um, auf Grundlage voreingestellter Speicherschwellenwerte, der Charge von zu transportierenden Wafern und wartender Wafer in Beständen, die Transport-Routing-Knoten, die zum vorübergehenden Speichern der Charge von zu transportierenden Wafern verfügbar sind, zu bestimmen, und um einen Zustand von Routing-Knoten, die zum Speichern der Charge von zu transportierenden Wafern nicht verfügbar sind, auf nicht verfügbar in einer voreingestellten Anzahl von Transportzyklen einzustellen.

9. Computerlesbares Speichermedium, das konfiguriert ist, um Computerprogramme zu speichern, die, wenn sie von mindestens einem Prozessor ausgeführt werden, den mindestens einen Prozessor veranlassen, Operationen des Verfahrens nach einem der Ansprüche 1 bis 6 auszuführen.

## Revendications

1. Procédé de génération de chemins, applicable à un système de commande de matériel, comprenant :
la réception (101) d'une demande de transport pour un lot de plaquettes à transporter, dans lequel la demande de transport inclut une position de stockage initiale et une position de stockage de destination pour le lot de plaquettes à transporter ;
l'acquisition (102) d'une liste de nœuds de routage obtenue à partir d'une mise en correspondance de positions de stockage, dans lequel la liste de nœuds de routage inclut des informations d'attribut des nœuds de routage correspondant aux positions de stockage, et les informations d'attribut incluent des informations d'état de stockage et des poids des nœuds de routage ;
la sélection (103), sur la base des informations d'état de stockage, de nœuds de routage de transport disponibles pour stocker temporairement le lot de plaquettes à transporter à partir de la liste de nœuds de routage ;
la détermination (104), sur la base des nœuds de routage de transport, d'une pluralité de chemins de transport initiaux entre la position de stockage initiale et la position de stockage de destination, dans lequel chaque chemin de transport initial de la pluralité de chemins de transport initiaux inclut deux ou plusieurs nœuds de routage de transport des nœuds de routage de transport, et chaque nœud de routage de transport des nœuds de routage de transport présente une durée d'attente actuelle respective obtenue sur la base des informations d'état de stockage et la détermination en outre d'une durée de transfert estimée respective entre chaque deux nœuds de routage de transport des deux ou plusieurs nœuds de routage de transport de chaque chemin de transport initial de la pluralité de chemins de transport initiaux ; et
le calcul (105) d'une somme respective de critères de mesure pour chaque chemin de transport initial de la pluralité de chemins de transport initiaux sur la base de la durée d'attente actuelle respective et du poids respectif de chaque nœuds de routage de transport et de la durée de transfert estimée respective entre chaque deux nœuds de routage de transport des nœuds de routage de transport, et la sélection d'un chemin de transport initial présentant une somme minimale de critères de mesure parmi la pluralité de chemins de transport initiaux en tant que chemin cible.

2. Procédé selon la revendication 1, dans lequel la sélection (103), sur la base des informations d'état de stockage, des nœuds de routage de transport disponibles pour stocker temporairement le lot de plaquettes à transporter à partir de la liste de nœuds de routage, comprend :
l'acquisition, à partir de la liste de nœuds de routage, d'un inventaire respectif de plaquettes en attente et d'un seuil de stockage prédéfini respectif de chaque nœud de routage parmi les nœuds de routage qui sont dans un état disponible ; et
la détermination, sur la base de seuils de stockage prédéfinis, du lot de plaquettes à transporter et de plaquettes en attente dans des inventaires, des nœuds de routage de transport disponibles pour stocker temporairement le lot de plaquettes à transporter, et le réglage d'un état des nœuds de routage qui ne sont pas disponibles pour stocker le lot de plaquettes à transporter à non disponible dans un nombre prédéfini de cycles de transport.

3. Procédé selon la revendication 1, comprenant en outre : l'acquisition de la durée d'attente actuelle respective ;
dans lequel l'acquisition de la durée d'attente actuelle respective comprend :
l'acquisition d'un inventaire respectif de plaquettes en attente de chaque nœud de routage de transport des nœuds de routage de transport ; et
le calcul de la durée d'attente actuelle respective sur la base de l'inventaire respectif de plaquettes en attente de chaque nœud de routage de transport des nœuds de routage de transport.

4. Procédé selon la revendication 1, dans lequel la détermination de la durée de transfert estimée respective comprend :
la détermination d'une distance de transport respective entre chaque deux nœuds de routage de transport des deux ou plusieurs nœuds de routage de transport de chaque chemin de transport initial de la pluralité de chemins de transport initiaux et d'un dispositif de transport respectif correspondant à la distance de transport respective ;
la réception d'une vitesse de transport respective du dispositif de transport respectif ; et
le calcul de la durée de transfert estimée respective sur la base de la distance de transport respective et de la vitesse de transport respective.

5. Procédé selon la revendication 1, comprenant en outre : l'acquisition du poids respectif de chaque nœud de routage de transport des nœuds de routage de transport ;
dans lequel l'acquisition du poids respectif de chaque nœud de routage de transport des nœuds de routage de transport comprend :
l'acquisition d'une règle de calcul du poids respectif selon un type d'un dispositif manipulant actuellement le lot de plaquettes à transporter ;
en réponse au fait que le dispositif est un dispositif de convoyage, l'acquisition de durées d'attente actuelles des deux ou plusieurs nœuds de routage de transport de chaque chemin de transport initial de la pluralité de chemins de transport initiaux, et la génération du poids respectif de chaque nœud de routage de transport des deux ou plusieurs nœuds de routage de transport ; et
en réponse au fait que le dispositif est un dispositif de stockage, l'acquisition d'un nombre respectif d'une ou plusieurs commandes de transfert pour chaque nœud de routage de transport des deux ou plusieurs nœuds de routage de transport de chaque chemin de transport initial de la pluralité de chemins de transport initiaux, et la génération du poids respectif de chaque nœud de routage de transport des deux ou plusieurs nœuds de routage de transport.

6. Procédé selon la revendication 1, dans lequel le calcul (105) de la somme respective de critères de mesure pour chaque chemin de transport initial de la pluralité de chemins de transport initiaux sur la base de la durée d'attente actuelle respective et du poids respectif de chaque nœud de routage de transport des nœuds de routage de transport et de la durée de transfert estimée respective entre chaque deux nœuds de routage de transport des nœuds de routage de transport comprend :
l'acquisition d'un nombre de transports d'un ou plusieurs dispositifs de transport respectifs coopérant avec chaque nœud de routage de transport des nœuds de routage de transport dans un cycle de transport actuel et d'un ou plusieurs paramètres de stockage respectifs de chaque nœud de routage de transport des nœuds de routage de transport, et le calcul d'une valeur d'état théorique respective de chaque nœud de routage de transport des nœuds de routage de transport ;
le calcul d'un critère de mesure respectif de chaque nœud de routage de transport des nœuds de routage de transport sur la base de la durée d'attente actuelle respective, de la durée de transfert estimée respective, du poids respectif et de la valeur d'état théorique respective ; et
le calcul de la somme respective de critères de mesure des deux ou plusieurs nœuds de routage de transport de chaque chemin de transport initial de la pluralité de chemins de transport initiaux.

7. Dispositif de génération de chemins, comprenant :
un module de réception de demande (501), configuré pour recevoir une demande de transport pour un lot de plaquettes à transporter, dans lequel la demande de transport inclut une position de stockage initiale et une position de stockage de destination pour le lot de plaquettes à transporter ;
un module d'acquisition de liste de nœuds (502), configuré pour acquérir une liste de nœuds de routage obtenue à partir d'une mise en correspondance de positions de stockage, dans lequel la liste de nœuds de routage inclut des informations d'attribut des nœuds de routage correspondant aux positions de stockage, et les informations d'attribut incluent des informations d'état de stockage et des poids des nœuds de routage ;
un module de sélection de nœud de routage (503), configuré pour sélectionner, sur la base des informations d'état de stockage, des nœuds de routage de transport disponibles pour stocker temporairement le lot de plaquettes à transporter à partir de la liste de nœuds de routage ;
un module de détermination de chemin initial (504), configuré pour déterminer, sur la base des nœuds de routage de transport, une pluralité de chemins de transport initiaux entre la position de stockage initiale et la position de stockage de destination, dans lequel chaque chemin de transport initial de la pluralité de chemins de transport initiaux inclut deux ou plusieurs nœuds de routage de transport des nœuds de routage de transport, et chaque nœud de routage de transport des nœuds de routage de transport présente une durée d'attente actuelle respective obtenue sur la base des informations d'état de stockage et pour déterminer en outre une durée de transfert estimée respective entre chaque deux nœuds de routage de transport des deux ou plusieurs nœuds de routage de transport de chaque chemin de transport initial de la pluralité de chemins de transport initiaux ; et
un module de sélection de chemin cible (505), configuré pour calculer une somme respective de critères de mesure pour chaque chemin de transport initial de la pluralité de chemins de transport initiaux sur la base de la durée d'attente actuelle respective et du poids respectif de chaque nœud de routage de transport des nœuds de routage de transport et de la durée de transfert estimée respective entre chaque deux nœuds de routage de transport des nœuds de routage de transport, et pour sélectionner, parmi la pluralité de chemins de transport initiaux, un chemin de transport initial présentant une somme minimale de critères de mesure en tant que chemin cible.

8. Dispositif selon la revendication 7, dans lequel le module de sélection de nœud de routage (503) comprend :
une unité d'acquisition d'inventaire de plaquettes, configurée pour acquérir, à partir de la liste de nœuds de routage, un inventaire respectif de plaquettes en attente et un seuil de stockage prédéfini respectif de chaque nœud de routage parmi les nœuds de routage qui sont dans un état disponible ; et
une unité de détermination de nœud, configurée pour déterminer, sur la base de seuils de stockage prédéfinis, du lot de plaquettes à transporter et de plaquettes en attente dans des inventaires, les nœuds de routage de transport disponibles pour stocker temporairement le lot de plaquettes à transporter, et pour régler un état des nœuds de routage qui ne sont pas disponibles pour stocker le lot de plaquettes à transporter à non disponible dans un nombre prédéfini de cycles de transport.

9. Support de stockage lisible par ordinateur, configuré pour stocker des programmes informatiques qui, lorsqu'ils sont exécutés par au moins un processeur, amènent l'au moins un processeur à mettre en œuvre des opérations du procédé selon l'une quelconque des revendications 1 à 6.
